# EUROPEAN PATENT APPLICATION

(11) **EP 2 272 347 A1**
(43) Date of publication of application: **12.01.2011**
(21) Application number: 09164552.3
(22) Date of filing: 03.07.2009
(51) Int. Cl.: A01N 43/707, A01P 11/00

(54) **Molluscicide**

(71) Applicant: Syngenta Participations AG, 4058 Basel (CH)
(72) Inventor: The designation of the inventor has not yet been filed

(57) **Abstract**

The present invention relates to the use of pymetrozine for protecting plants and propagation material thereof against damage from gastropods.

## Description

The present invention relates to the use of pymetrozine for the control of gastropods. In particular, it relates to a method of protecting plants and plant propagation material thereof against damage by gastropods by use of pymetrozine.

Gastropods, such as slugs and snails, are an increasing problem in horticulture and agriculture. They cause severe damage by feeding, and also generate unsightly mucus trails. Gastropods are serious pests, especially of cereals such as wheat, barley, oats and oil seed rape, and also of ornamental and vegetable plants, and rice. Gastropods feed both above and below the surface of the ground, on seeds, seedlings and plants, damaging shoots, roots, leaves and flowers, therefore reducing plant stand and crop yield.

Changes in the management of crops (such as minimum tillage, direct drilling, and high organic matter build up in the soil) have led to increased population densities of slugs and snails, further exacerbating this problem and resulting in more extensive and severe damage to crops.

Niclosamide, a molluscicide with respiratory and stomach action, is the standard compound mainly in rice for the control of golden apple snail.

There are chemical and non-chemical methods for controlling slugs and snails, whilst each of these methods has its merits, none of them provide levels of control that are adequate.

Therefore there exists a need for a control method for slugs and snails, that is efficacious, but is not harmful to beneficial insects or animals. Surprisingly, it has now been found that pymetrozine provides control of slugs and snails without harming beneficial organisms.

According to the present invention, there is provided a method for controlling gastropods, comprising exposing the gastropods to a molluscicidally effective amount of pymetrozine. In particular, in the context of plants, pymetrozine reduces the infestation of gastropods.

The present invention may be used to control any gastropods. For example, the present invention may be used to control gastropods such as *Arion* spp. (e.g. *A. ater, A. circumscriptus, A. distinctus, A. fasciatus, A. hortensis, A. intermedius, A. rufus, A. subfuscus, A. silvaticus, A. lusitanicus), Bradybaena spp.* (e.g. *B.fruticum)*, *Cantareus* spp. (e.g. *C*. *asperses), Cepaea* spp. (e.g. *C*. *hortensis, C. nemoralis), Cochlodina* spp. (e.g. *C*. *laminata), Deroceras* spp. (e.g. *D. agrestis, D. empiricorum, D. laeve, D. panornimatum, D. reticulatum), Discus* spp. (e.g. *D. rotundatus), Euomphalia* spp., *Galba* spp. (e.g. *G. trunculata), Helicella* spp. (e.g. *H. itala, H. obvia), Helicigona* spp. (e.g. *H. arbustorum), Helicodiscus* spp., *Helix* spp. (e.g. *H. aperta, H. aspersa, H. pomatia), Limax* spp. (e.g. *L. cinereoniger, L. flavus, L. marginatus, L. maximus, L. tenellus), Lymnaea* spp. (e.g. *L. stagnalis), Milax* spp. (e.g. *M. gagates, M. marginatus, M sowerbyi, M. budapestensis), Opeas* spp., *Oxyloma* spp. (e.g. *O. pfeifferi), Pomacea* spp. (e.g. *P. canaliculata), Tandonia* spp. (e.g. *T. budapestensis, T. sowerbyi), Vallonia* spp., *and Zonitoides* spp. (e.g. Z. *nitidus).*

Suitably the gastropods are classified within the subclass pulmonata and prosobranchia. More suitably the present invention relates to the control of snails and slugs. In particular, the gastropods may be selected from the group consisting *of Helix* spp., *Agriolimax* spp., *Limax* spp., *Milax* spp., *Arion* spp., *Pomacea* spp. and *Deroceras* spp..

Details of pymetrozine can be found in 'The Pesticide Manual', 14^{th} edition, published in 2006 by the British Crop Protection Council.

Further pymetrozine may be mixed with one or more other pesticidal compounds so that the mixture simultaneously provides control against more than one pest. For example, the other pesticidal compound can be selected from fungicide, insecticide, nematicide and molluscicide.

Examples of a pesticidal compound having molluscicidal activity are metaldehyde, methiocarb, thiodicarb, spinosad, spinetoram or metallic ions (such as iron or copper, for example in the form of iron phosphate or iron chelate (such as FeEDTA,). In one embodiment, pymetrozine is mixed with at least one compound selected from the group consisting of metaldehyde, spinosad, spinetoram and a metallic ion (such as iron EDTA). In particular, pymetrozine is mixed with a metal ion. In one embodiment pymetrozine is mixed with a metallic ion. In a further embodiment, the metallic ion is in the form of iron chelate, especially iron EDTA. Alternatively, the metallic ion is in the form of iron phosphate.

The term "controlling" or "control" as used herein includes paralysis, repellency, feeding inhibition and killing of gastropods. In the context of plants, it includes protecting plants from gastropod infestation or damage.

The term "molluscicidally effective amount" refers to an amount of the compound that, when ingested or sensed, is sufficient to achieve a good level of control. In an embodiment, the amount is 10 to 1000 grams of pymetrozine /ha, preferably 50 to 500 g of AI /ha, especially 100 to 400 g of AI/ha.

The present invention has the added advantage that, since pymetrozine has insecticidal activity, good insect control may also be achieved at the locus at which the compound is applied, for example on and around the plants.

Pymetrozine may be applied directly to the plants, or to the locus in which they are growing, for example, in the form of a composition, for example, by spray application or as a bait. Suitably, the compound is applied to the soil adjacent to the base of the plant stem, to ensure maximum exposure of slugs or snails close to the plant to the compound.

Pymetrozine may also be used to protect the roots of plants, by application directly to the soil or growing media. Preferably this is a preventative measure that takes place before the plant is planted, so that the compound can be thoroughly mixed throughout the growing medium.

Accordingly, the invention also relates to a method for protecting plants or propagation material thereof against damage by gastropods, comprising applying to the plants or the locus surrounding the plants with a molluscicidally effective amount of pymetrozine. Suitably, pymetrozine is applied in the form of a composition or formulation. For example, pymetrozine may be applied in the form of, as a component of, incorporated into, coated onto or adsorbed into a bait. Suitably, the composition further comprises one or more adjuvants, surfactants and/or dispersants, to facilitate absorption of the compound by the slug gut. In one embodiment, the composition further comprises at least one adjuvant. In another embodiment, the composition further comprises at least one surfactant.

Pymetrozine may be applied in any convenient physical form. For example it may be formulated as an emulsifiable concentrate, suspension concentrate, ready-to-use solution, emulsion, microemulsion, sprayable powder, soluble powder, dispersible powder, wettable powder, dust, granule, pellet, bait or capsule formulation.

For consumer application, the compositions of the present invention are suitably formulated in a ready-to-use format, such as a sprayable powder, granule, or pellet formulation. For professional application to agricultural crops, the compositions of the present invention are suitably formulated as dispersible granules, sprayable liquid concentrates, ready to use baits, or pellets.

In one embodiment, pymetrozine is in the form of a bait composition that comprises a mollusc attractant, and optionally a carrier.

Any suitable carriers that are conventionally used in crop protection products may be used in the composition of the present invention. These are well known to those skilled in the art of formulation technology.

A mollusc attractant is anything that attracts molluscs. The attractant may be a phagostimulant.

The attractants or carriers may be phagostimulants. Phagostimulants are conventionally used in slug and snail bait formulations to attract gastropods to ingest the molluscicide, and are typically attractants and/or food. Mixtures of phagostimulants with other suitable organic and/or inorganic carriers may also be used.

Suitable phagostimulants for molluscicides include ground cereals (such as wheat flour, barley flour, rye flour and rice starch), crushed soya beans, fish meal, molasses, crushed rapeseed and the like. Mixtures of phagostimulants may also be used in the present invention.

A phagostimulant may act as a carrier and an attractant. Any suitable mollusc attractant may be used in the bait composition. Other known attractants include beer, yeast, and extract of dead slugs.

To make the bait more palatable for gastropods, one or more of the following substances may also be used as additive:
a) vitamin B, in particular B1, B2, nicotinic acid or nicotinamide;
b) vitamin E;
c) animal or vegetable proteinaceous material, for example albumins and their hydrolytic degradation products, in particular those obtained by enzymatic hydrolysis by, for example, pepsin (such as metaproteins, proteoses, peptones, polypeptides, peptides, diketopiperazines and amino acids);
d) one or more amino acids or salts or amides thereof, which may also be synthetic products;
e) a nucleic acid or a hydrolytic degradation product thereof, such as a nucleotide, a nucleoside, adenine, guanine, cytosine, uracil or thymine;
f) urea or carbamic acid;
g) an ammonium salt, for example ammonium acetate;
h) an amino sugar, for example glucosamine or galactosamine;
i) compounds of sodium, potassium, calcium or magnesium, or traces of compounds of manganese, copper, iron, cobalt, zinc, aluminium, boron or molybdenum;
j) phosphoric acid or sugar phosphates;
k) water.

The bait composition may also comprise one or more bird repellents, such as anthraquinone.

The bait composition may optionally comprise stabilizers that have a fungistatic, fungicidal, bacteriostatic and/or bactericidal action, such as sodium benzoate, methyl p-hydroxy-benzoate, cetyltrimethylammonium bromide, citric acid, tartaric acid, sorbic acid, phenols, alkylphenols or chlorinated phenols.

This application may also control at the same time some insect pests, mainly sucking pests such as aphids, whiteflies or asides or plant hoppers such as green leaf hopper or brown plant hopper in rice or chewing pests such as Meligethes beetle in oil seed rape.

The composition may be formulated to provide a slow or delayed release of pymetrozine over time, so as to provide long-term protection against gastropods. Suitable slow-release auxiliaries which may be employed in the formulation include, for example, resins (such as urea/formaldehyde resins), soybean meal, waxes, stearates and oils (such as castor oil).

Other auxiliaries that may be used in the composition of the present invention include, for example, binders (such as methylcellosolve, polyvinylpyrrolidone, polyvinyl alcohol, polyacrylates, polymethacrylates, natural waxes, chemically modified waxes and synthetic waxes, sugars, starch, alginates, agar, lignosulphonates and gum arabic), humectants (such as polyalcohols, for example sugars or glycerol), preservatives, colorants and repellents for warm-blooded species.

The bait composition may also be coated to protect it from moisture degradation, and subsequent leaching of pymetrozine into the soil. Such a coating may extend the life of the bait composition, and reduce the re-application frequency needed. Suitably the bait composition does not prematurely degrade when it is applied to damp soil.

The bait composition is typically provided in the form of granules or pellets. The size of the pellets is such that they can be readily consumed by the target gastropods to ensure ingestion. Typically, the pellets are from about 1 to about 5 mm in length.

Since pymetrozine is a systemic insecticide the dissolved active ingredient may be taken up by the plants and protect the crop from be fed by an insect or by a mollusc. According to the present invention, there is provided a method for reducing mollusc damage to plants, comprising applying to the plants or plant propagation material thereof or the locus thereof with a molluscicidally effective amount of pymetrozine, or of a molluscicidally effective amount of a composition comprising pymetrozine. The present invention also extends to a method for improving crop yield, comprising treating the crop or the locus surrounding the crop with a molluscicidally effective amount of pymetrozine, or of a molluscicidally effective amount of a composition comprising a pymetrozine.

The term "locus" as used above refers to the physical location where the crop or plant is growing. For example, for agricultural crops, the locus may be a field; for vegetable crops, the locus may be a flowerbed or vegetable patch; and for ornamental plants, the locus may be a flower pot or container.

"Improving crop yield" means increasing the yield of a plant (for example as measured by plant biomass, grain or fruit yield, protein content, carbohydrate or oil content, or leaf area) by a measurable amount over the yield of the same plant produced under the same conditions, but without the application of the subject method.

According to the present invention, there is provided a composition for controlling gastropods, comprising a molluscicidally effective amount of pymetrozine, a mollusc attractant, and optionally a carrier. Optionally, the composition also comprises an adjuvant such as a surfactant. Suitably, the composition is a bait composition. Suitably, pymetrozine is incorporated into, adsorbed into, or coated onto the bait.

Formulations that are particularly suitable for controlling gastropods according to the present invention are granules or pellets which comprise from 0 to 90% by weight of carrier material, from 0.01 to 20 wt% by weight of active ingredient, from 10 to 95% by weight of phagostimulant, from 0.5 to 25% by weight of binder, and optionally from 0 to 15% by weight of other auxiliaries. Suitably, the granules or pellets comprise from 0 to 70 wt% by weight of carrier material, from 1 to 10% by weight of active ingredient, from 25 to 90% by weight of phagostimulant, from 5 to 20% by weight of binder, and optionally from 0 to 15% by weight of other auxiliaries.

The application rate of the composition of the invention depends on the concentration of the pymetrozine in the formulation. Typically, the concentration of the pymetrozine compound will be adjusted so that the composition may be applied at a dose in the range from about 1 to 30kg bait /ha. In an embodiment, the pymetrozine is applied between 10 to 1000 grams of pymetrozine /ha, preferably 50 to 500 g of AI /ha, especially 100 to 400 g of AI/ha. To achieve optimal control it is preferable that the molluscicidal composition is distributed as uniformly as possible between the plants.

According to the present invention, there is provided use of a composition comprising pymetrozine to control gastropods. The present invention may be used to protect any crop, ornamental or vegetable plants from damage by gastropods, in either open (such as plant pots, gardens, fields and the like) or closed (such as glasshouses, polytunnels and the like) environments.

Suitable target crops for control of gastropods include, for example cereals (such as wheat, barley, rye, oats, rice, maize or sorghum); beet (such as sugar or fodder beet); fruit (such as pome fruit, stone fruit, apples, pears, plums, peaches, almonds, cherries, strawberries, raspberries or blackberries); legumes (such as beans, lentils, peas or soya beans); oil crops (such as oil seed rape, mustard, poppies, olives, sunflowers, coconuts, castor, cacao or peanuts); marrows (such as pumpkins, cucumbers or melons); fibre plants (such as cotton, flax, hemp or jute); citrus fruits (such as oranges, lemons, grapefruits or tangerines); vegetables (such as spinach, lettuce, asparagus, cabbage species, carrots, onions, tomatoes, potatoes, or capsicums); laurels (such as avocado, Cinnamonium or camphor); and tobacco, nuts, coffee, egg plants, sugar cane, tea, pepper, grapevines, hops, the banana family, latex plants and ornamentals. In an embodiment pymetrozine is suitable for gastropod control in rice, oil seed rape, vegetables and ornamentals.

For example the invention may be used on any of the following ornamental species: *Ageratum, Alonsoa, Anemone* spp., *Anisodontea capsenisis, Anthemis, Antirrhinum, Rhododendron* spp., *Begonia* spp. *(eg. B. elatior, B. semperflorens, B. tubéreux*), *Bougainvillea* spp., *Brachycome* spp., *Calceolaria, Capsicum annuum, Catharanthus roseus,* Ornamental *Brassica, Canna* spp., *Chrysanthemum, Cineraria* spp. (*C*. *maritime*), *Crassula coccinea, Cuphea ignea, Dicentra spectabilis, Dorotheantus, Eustoma grandiflorum, Forsythia, Fuchsia* spp., *Geranium Gnaphalium, Gomphrena globosa, Heliotropium, Helianthus, Hibiscus, Hortensia, Hosta, Hypoestes phyllostachya, Impatiens* spp. (*I. Walleriana*), *Iresines, Kalanchoe* spp., *Lantana camara, Lavatera trimestris, Leonotis leonurus, Lilium, Mesembryanthemum, Mimulus, Nemesia, Tagetes, Dianthus* spp. (carnation), *Canna, Oxalis, Bellis, Pelargonium* spp. *(P. peltatum, P. Zonale*), *Viola* spp. (pansy), *Petunia, Plecthranthus, Poinsettia, Parthenocissus* spp. *(P. Quinquefolia, P. Tricuspidata), Primula, Ranunculus, Rosa* spp. (rose), *Salvia, Scaevola aemola, Schizanthus wisetonensis, Solanum, Surfinia, Tagetes* spp., *Nicotinia, Verbena* spp., *Zinnia* spp. and other bedding plants. Preferred within this class of ornamental crops are *Viola, Petunia, Begonia, Impatiens, Geranium* (including from seeds and cuttings), *Chrysanthemum* (including from cuttings), *Rosa* (including pot plants and from cuttings), *Poinsettia, Ranunculus, Fuchsia, Salvia* and *Hortensia.*

The compositions of the present invention are also suitable for the protection of plant propagation material, for example seed, such as fruits, tubers or kernels, from gastropods. The propagation material can be treated with the composition prior to planting, for example by soaking, spraying or coating seed prior to sowing. Alternatively, the composition can be applied directly to the locus at which the propagation material is to be planted (for example onto the ground, into a seed furrow, or into pot plant growing media). The present invention may also be used to protect stored products from gastropods.

The following examples are presented to further illustrate the invention, and are not intended to be limiting.

### EXAMPLES

### Example 1

Trial field was prepared according to standard practice including rotovating, levelling, release of water to saturate and the plots were separated from each other.

Japonica/Indica variety were sown at 100∼120 kg seed/ha; Hybrid variety at 50-60 kg seed/ha. The pest, the Golden Apple (Pomacea sp), was released corresponding to 20 snails/plot just before sowing. The development stage of the snail was uniform at the moment they were released. Pre-germinated rice seeds were sown by hand in 2x2 to 4x4 m2 plots shaped by plastic board to avoid contamination. Plots were kept saturated to 10 days after sowing (DAS) and water gradually introduced after 10 DAS. The active ingredients were applied as a broadcast pellet formulation onto the water saturated soil at 7DAS or when snails became active (moving).
Tables 1 and 2 below show the level of snail mortality compared to a check (untreated plot) at 1, 3, and 5 days after application (DAA) and the level of crop damage compared to the check at 1, 3 and 5 days after application respectively.

**Table 1:**

| **product** | **rate, grams/ ha** | **1 DAA2** | **3DAA2** | **5DAA2** |
|---|---|---|---|---|
| Niclosamide | 280 | 73% | 78% | 78% |
| Pymetrozine | 390 | 2% | 3% | 2% |

**Table 2:**

| **product** | **rate, grams/ ha** | **1 DAA2** | **3DAA2** | **5DAA2** |
|---|---|---|---|---|
| Niclosamide | 280 | 100% | 78% | 68% |
| Pymetrozine | 390 | 84% | 81% | 79% |

### Example 2 - Forced ingestion study on D. reticulatum

Adult *D. reticulatum* were field-collected from an irrigated plot of mixed herbage and maintained in plastic boxes lined with moist, unbleached, absorbent paper and under controlled environmental conditions (12 hour photoperiod, 10°C, 90%RH). Slugs were fed *ad. lib.* on wheat grain and a mixture of fresh foliage for a period of up to, but not exceeding, one week prior to testing. Slugs were then starved for a period of 48 h before treatment.

Individual slugs were weighed and anaesthetized using CO₂ for a period of 10-20 minutes. A test solution containing pymetrozine were incorporated into a warm agar jelly (1.0 % w/v) to reduce the risk of regurgitation. Twenty µl aliquots of warm agar mix was then injected into the buccal cavity of a single slug using a fine glass micro-syringe and gently eased into the slug crop. Individual slugs were then placed into labelled Petri dishes lined with moist, unbleached, absorbent paper. Following application of treatment, slugs were maintained under controlled environmental conditions (12 hr photoperiod, 10°C, 90% RH), and slug health recorded over the subsequent three days. Slug health was classified into one of four categories:
- Healthy (showing no symptoms)
- Affected (showing some symptoms of poisoning, excessive mucus production/deformity)
- Moribund (severely affected/paralysed, unable to move in response to gentle prodding)
- Dead

Twenty (20) slugs were injected. The health of the slugs after 72 hours after the treatment are shown in Table below (presented as a percentage of the total number of slugs tested).

| **Species** | **Conc. (mg a.i./slug)** | **Healthy %** | **Affected %** | **Moribund %** | **Dead %** |
|---|---|---|---|---|---|
| Deroceras reticulatum | 0.5 | 0 | 0 | 0 | 100 |
| Deroceras reticulatum | 0.05 | 90 | 0 | 0 | 10 |

## Claims

1. A method for controlling gastropods, comprising exposing the gastropods to a composition comprising a molluscicidally effective amount of pymetrozine.

2. The method according to claim 1, wherein pymetrozine is applied in the form of a composition.

3. The method according to claim 2, wherein the composition further comprises at least one further pesticidal compound.

4. The method according to claim 1, wherein the gastropod is selected from the subclass selected from pulmonata and prosobranchia.

5. The method according to claim 4, wherein the gastropods are selected from the group consisting of *Helix* spp., *Agriolimax* spp., *Limax* spp., *Milax* spp., *Arion* spp., *Pomacea* spp. and *Deroceras* spp..

6. The method according to either claim 1 or claim 2, wherein pymetrozine or a composition thereof is applied to a locus at which gastropods are present.

7. The method according to either claim 1 or claim 2, wherein pymetrozine is in the form of a bait composition that comprises a carrier, and optionally an attractant.

8. The method for reducing gastropod damage to plants or propagation material thereof, comprising applying to the plants, propagation material thereof or the locus thereof a molluscicidally effective amount of pymetrozine.

9. The method according to claim 8 wherein the plant is selected from rice, oil seed rape, vegetables and ornamentals.

10. A composition for controlling gastropods, comprising
a) a molluscicidally effective amount of pymetrozine,
b) a mollusc attractant, and optionally
c) a carrier.

11. The composition according to claim 10, wherein the mollusc attractant or carrier, is a phagostimulant.

12. A composition according to either claim 10 or claim 11, further comprising at least one surfactant.

13. A composition according to any one of claims 10 to 12, comprising at least one further molluscicidal compound.

14. A composition according to any one of claims 10 to 13, further comprising iron chelate.

15. Use of a composition comprising pymetrozine for protecting plants and propagation material thereof against damage from gastropods.
